# EUROPEAN PATENT APPLICATION

(11) **EP 1 298 556 A1**
(43) Date of publication of application: **02.04.2003**
(21) Application number: 01943899.3
(22) Date of filing: 02.07.2001
(51) Int. Cl.: G06F 17/60, G06F 19/00

(54) **APPARATUS AND METHOD FOR DISPLAYING INFORMATION CONCERNING BUSINESS SCHEDULE**

(30) Priority: 03.07.2000 JP 2000201622
(71) Applicant: NTT DoCoMo, Inc., Tokyo 100-6150 (JP)
(72) Inventor: NISHIKAWA, Seiji, Saitama-shi, Saitama 331-0063 (JP); SHIKIMI, Masanori, Yokohama-shi, Kanagawa 225-0002 (JP); NOSE, Yukiko, Yokohama-shi, Kanagawa 236-0057 (JP)
(74) Representative: HOFFMANN - EITLE
(86) International application number: JP0105710
(87) International publication number: WO02003278

(57) **Abstract**

PCs 10-1 to 10-5 are computers used by stuff members and each computer has function for making schedule information and application information correlated with the schedules in response to operation of each stuff member. A local server 20 is a computer which preserves the schedule information produced by the PCs 10-1 to 10-5, circulates application document information relating to the schedule information among the PCs, and manages approval conditions of the applications. Data of an application- which has been approved are sent from the local server 20 to an account system not shown, where the data are subjected to account processing concerning the application.

## Description

### TECHNICAL FIELD

The present invention relates to a method and apparatus for displaying information relating business schedules and business application associated with the business schedules.

### BACKGROUND ART

Schedulers capable of storing schedules and displaying them are known.

A business performer can input business schedules to be performed by himself or herself and display the stored schedules to confirm them in cases he or her needs it.

By the way, when a business performer performs a business on the business schedules, he or she often needs to submit an application associated with the business. For example, when a business trip is scheduled, it is required for the business performer to submit a written application to request traffic expenses necessary to go to a destination of the business trip to his or her supervisor. Alternatively, if there is a schedule of overtime work, a written application for its permission should be submitted. Furthermore, there is a case that a business performer submits a written application to request a day off when he or she has finished a business, and such an application has no direct relation to the business. Hereinbelow, application submitted by a business performer will be referred to as a business application.

As understood from the above examples, business performers are required to properly handle business applications related to each business schedule, in addition to management of his or her business schedule.

However, schedules and business applications are managed by independent systems, respectively. Therefore, if a business performer wants to confirm business application submitted for his or her own business schedules and how far the business application has been approved at present, the business performer is obliged to do it using different systems. Such a confirmation is complicated in operations.

### DISCLOSURE OF THE INVENTION

The present invention has been made to take the foregoing circumstances into account, and an object of the present invention is to provide a method and apparatus enabling business performers to easily manage both their schedules and business applications related to the schedules.

In order to achieve the object, the present invention provides a scheduler comprising storage means for storing a business schedule of a business performer and application information indicating a matter requested by the business performer being correlated each other, extracting means for extracting the business schedule and the application information stored in the storage means, and display means for displaying the extracted business schedule and application information being correlated each other.

According to the scheduler, business schedules of a business performer and application information are displayed being correlated wach other. Therefore, the business performer can easily manage his or her own business schedules and application matters only by referring to this display.

An example of application information is information to request an approval about a special matter. In this case, examples of the special matter include at least one of doing overtime work and getting a day off.

Another example of application information is information to carry out a special job. In this case, examples of the special job include at least one of payment of transportation expenses, giving allowance and giving expense account.

In a preferred embodiment, the display means displays both the business schedule and the application information on the same screen.

In another preferred embodiment, the display means capable of selectively switching a first display screen displaying the business schedule and a second display screen displaying the application information corresponding to the business schedule in response to an operation of the business performer.

In a preferred embodiment, display means displays the type of the requested matter indicated by the application information and progress of approval processing for the business application.

In this embodiment, the display means displays the type of the requested matter and the progress of approval processing by means of an icon. In stead of this, the display means may express the progress of the approval processing for the business application by a background color of a screen to be displayed.

In a preferred embodiment, the display means is provided in a mobile communication terminal that communicates data through a wireless manner.

The present invention further provides a schedule displaying method comprising the steps of extracting a business schedule and application information among business schedules and application information stored in storage means, each business schedule and each application information being correlated each other, and displaying the extracted business schedule and application information being correlated each other.

In a preferred embodiment, the displaying step is a step for displaying both business schedule and application information on the same screen.

In another preferred embodiment, the displaying step includes the steps of displaying the business schedule, receiving an operation of the business performer to select a desired business schedule from the business schedule displayed, and displaying the application information stored being correlated with the selected business schedule.

The scope of working of the present invention include not only the production and selling of the scheduler described above but also embodiments which include distributing a program causing a computer to act as such a scheduler to users through an electronic communication link or recording such a program in computer readable media and distributing them to users.

### BRIEF DESCRIPTION OF THE DRAWINGS

Fig.1 is a block diagram exemplifying the entire configuration of a system according to an embodiment of the present invention.
Fig.2 is a block diagram showing the configuration of a PC in the embodiment.
Fig.3 is a block diagram showing the configuration of a local server in the embodiment.
Fig.4 is a format diagram showing an example of a route information storage in the embodiment.
Fig.5 is a format diagram showing an example of stuff member information storage in the embodiment.
Fig.6 is an illustration pictorially showing an example of a circulation route table in the embodiment.
Fig.7 is a format diagram showing an example of a schedule information storage in the embodiment.
Fig.8 is an illustration pictorially showing an example of a GUI displayed in the PC 10 in the embodiment.
Fig.9 is an illustration pictorially showing an example of the GUI displayed in the PC 10 in the embodiment.
Figs.10A, 10B, 10C, 10D, 10E and 10F are illustrations pictorially showing examples of icons displayed on the GUI in the embodiment.

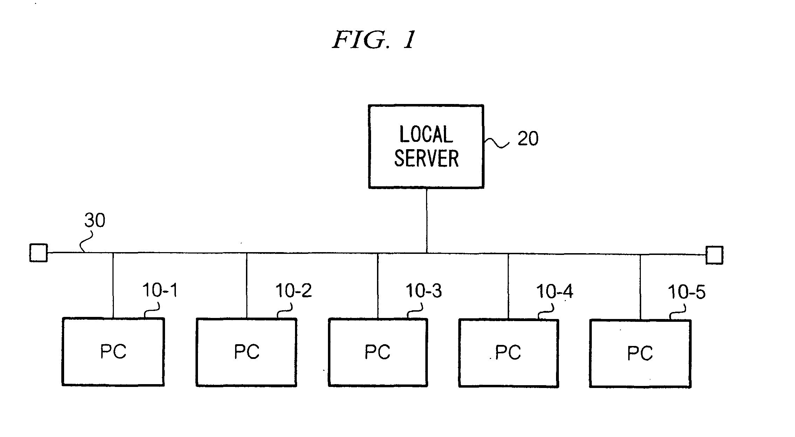

Fig.1 pictorially shows an example of a GUI displayed on a display 15 of the PC in the embodiment.

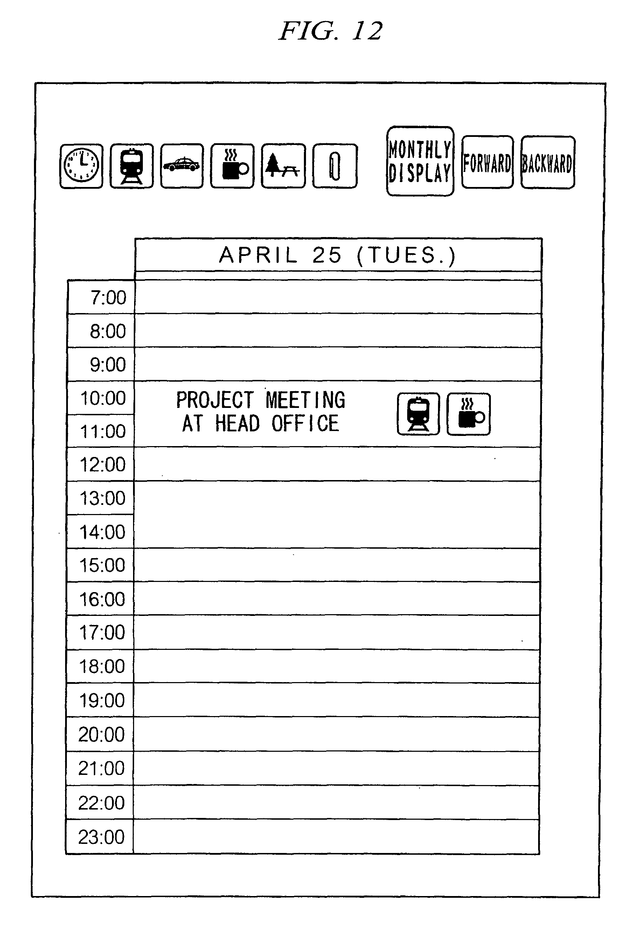

Fig.12 illustrates an example of the GUI displayed in the PC 10 in the embodiment.

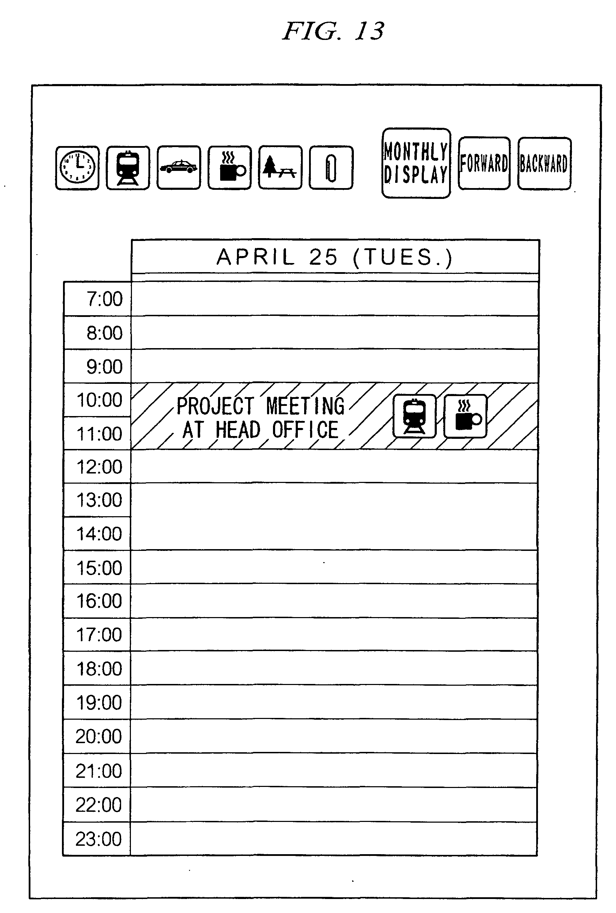

Fig.13 illustrates an example of the GUI displayed in the PC 10 in the embodiment.

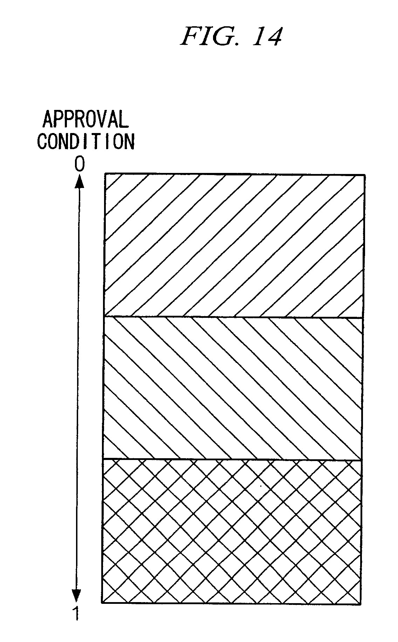

Fig.14 pictorially shows a color tone table used in the embodiment.

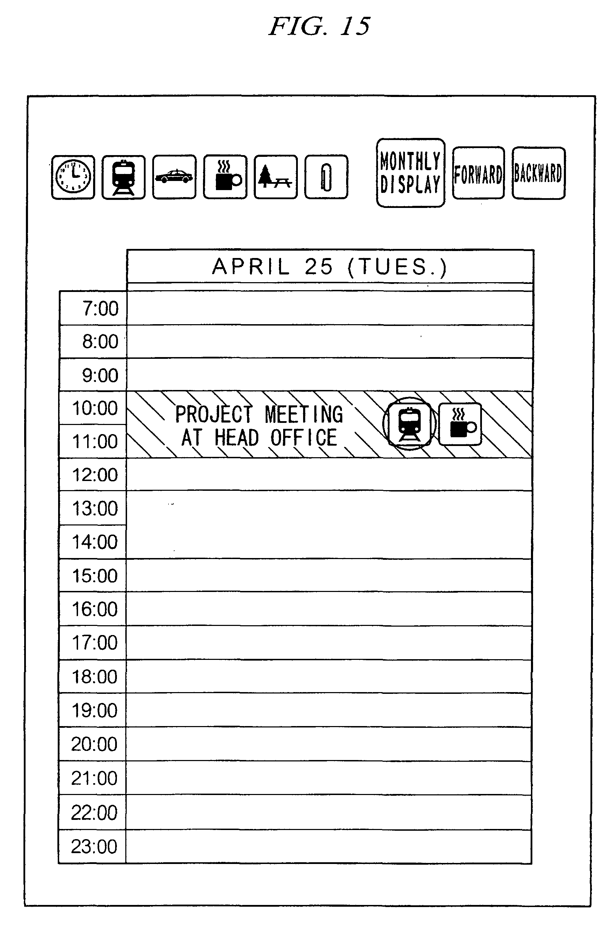

Fig.15 illustrates an example of the GUI displayed in the PC 10 used in the embodiment.

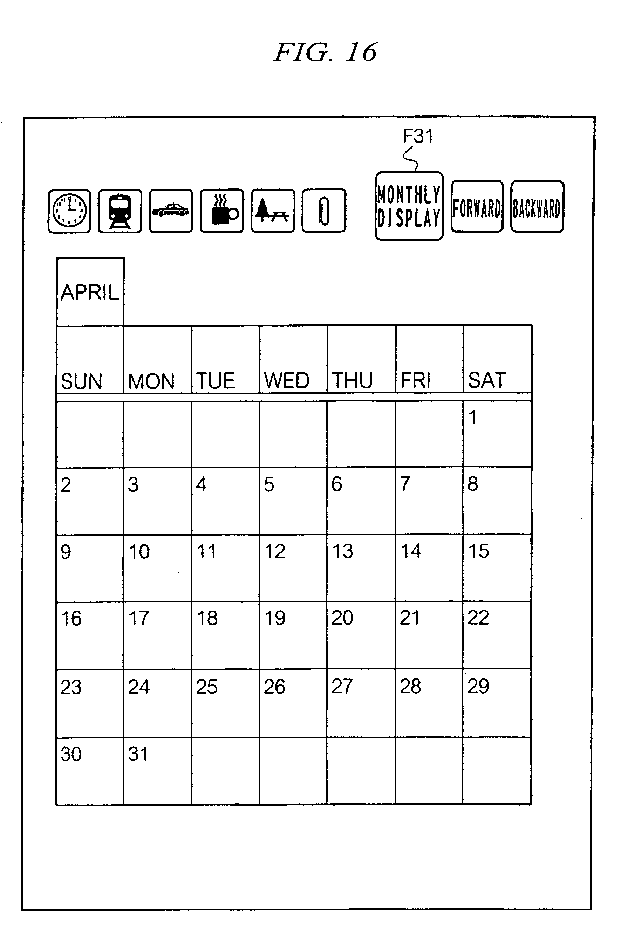

Fig.16 illustrates an example of the GUI displayed in the PC 10 used in the embodiment.

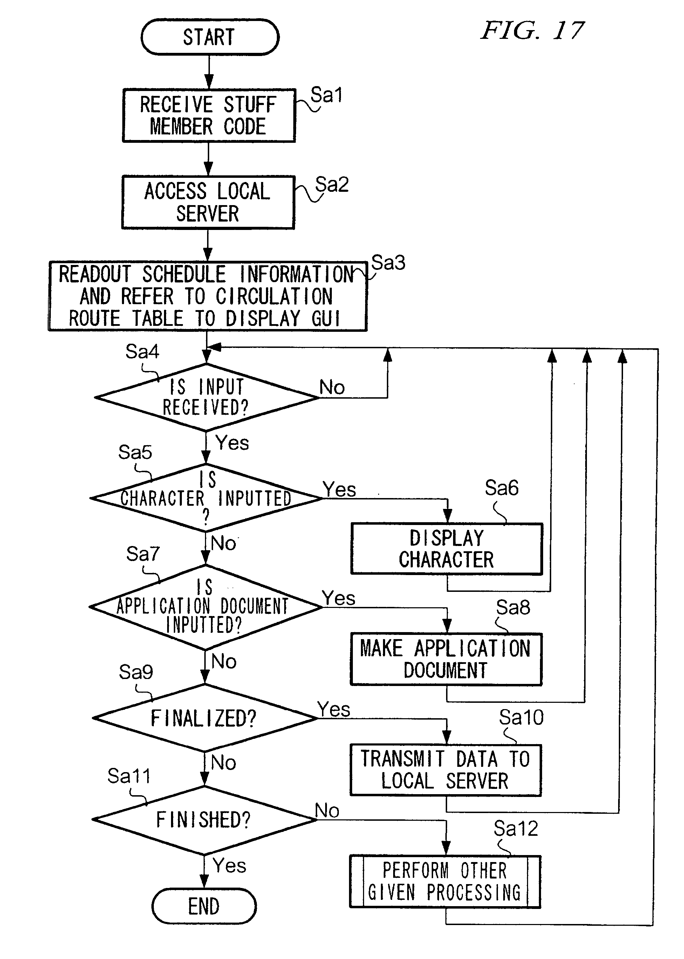

Fig.17 is a flowchart showing an operation executed in accordance with a main routine of a registration/reading program by a CPU of the PC used in the embodiment.

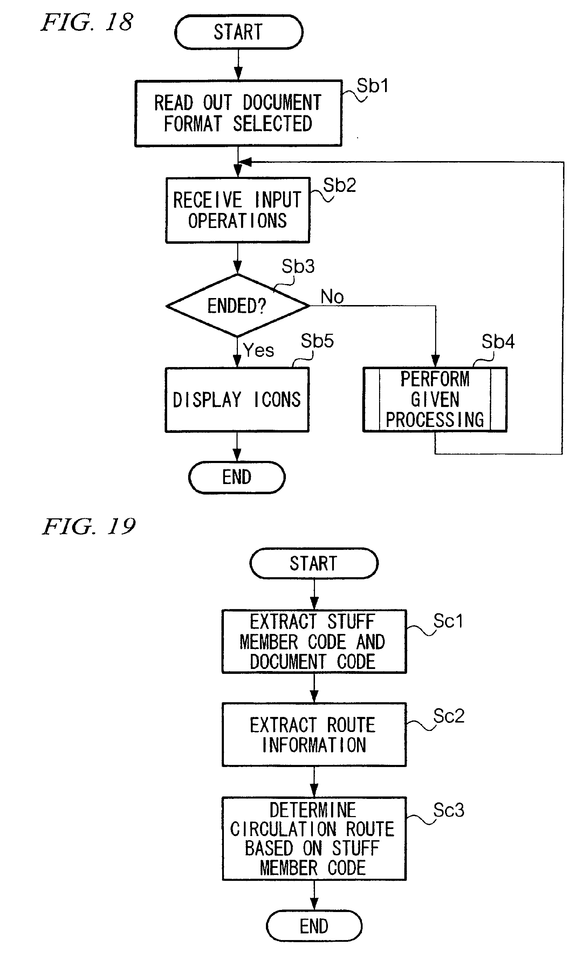

Fig.18 is a flowchart showing an operation for making an application document executed by a CPU of the PC used in the embodiment.
Fig.19 is a flowchart showing an operation in which a circulation route is set by the CPU of a local server used in the embodiment.

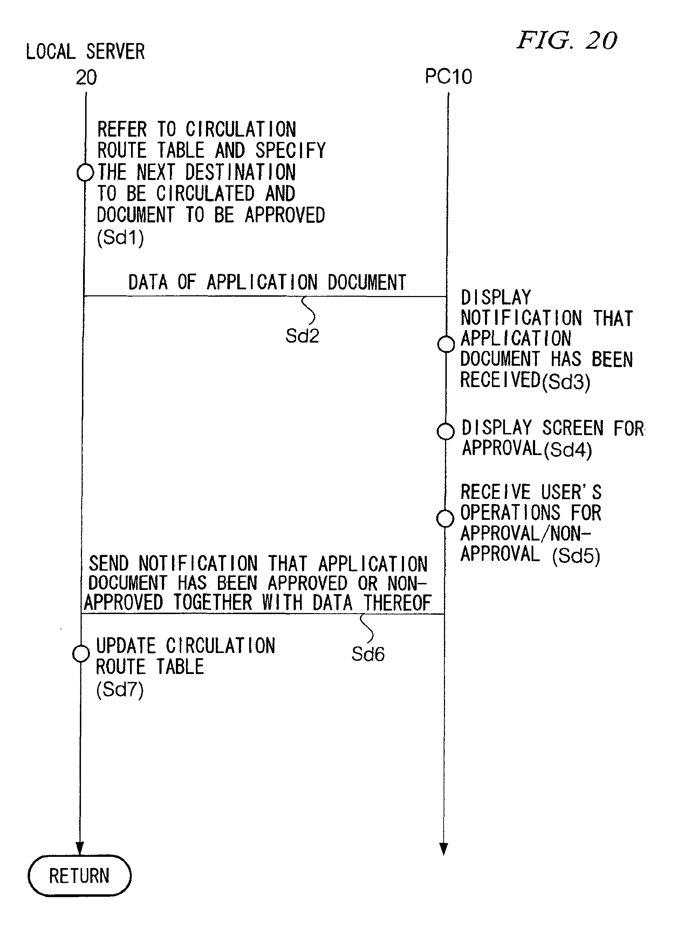

Fig.20 is a flowchart showing an operation in which an application document is circulated by the CPU of a local server used in the embodiment.

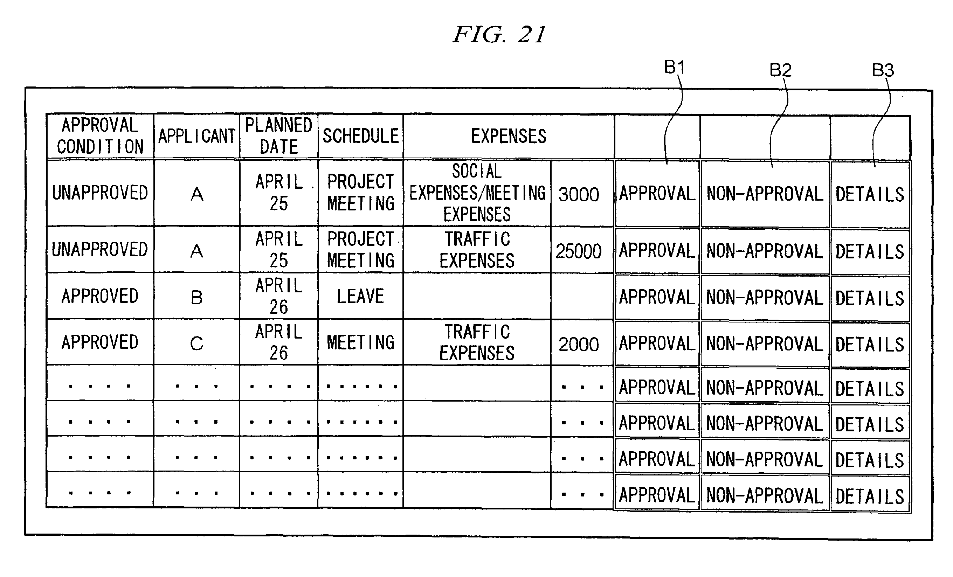

Fig.21 pictorially illustrates an example of an approval screen displayed on the PC used in the embodiment.

### BEST MODE FOR CARRYING OUT THE INVENTION

Referring to the accompanying drawings, embodiments of the present invention will now be described. However, the present invention will not be restricted to such embodiments, but various changes can be made within its technical concept.

### A: Configuration

The configuration of an embodiment will now be described.

### (1) Configuration of entire system

Fig.1 is a block diagram entirely showing the configuration of a system according to the embodiment.

As shown therein, the system comprises a plurality of personal computers (hereafter, called PCs) 10-1 to 10-5, a local server 20, and a communication line 30 mutually connecting those components.

The PCs 10-1 to 10-5 are computers to be used by staff members and each PC has functions of producing schedule information and various type of application document information related to the schedule information in response to, for example, operations performed by a staff member. Hereinbelow, an unspecified PC in the PCs 10-1 to 10-5 is to be referred to, such a PC will be referred to as "PC 10."

The local server 20 preserves the schedule information produced by the PCs 10, circulates application document information relating to the schedule information among the PCs, and manages approval conditions of the applications. Data of an application which has been approved are sent from the local server 20 to an account system not shown, where the data are subjected to account processing concerning the application.

### (2) Configuration of PCs 10

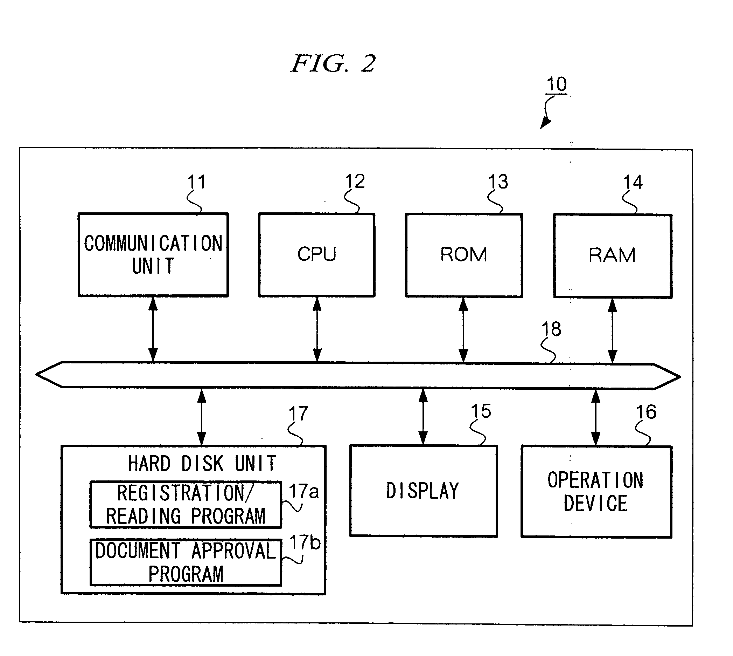

With reference to a block diagram shown in Fig.2, each PC 10 will now be described in its configuration. As shown therein, the PC 10 includes a communication unit 11, CPU (Central Processing Unit) 12, ROM (Read Only Memory) 13, RAM (Random Access Memory) 14, display 15, operation device 16, hard disk unit 17, and bus 18 mutually connecting those components.

The communication unit 11 comprises a connection interface to the communication circuit 30 and communication control circuit, and enables data communication with the local server 20 through the communication line 30.

The ROM 13 is a read-only program memory. The CPU 12 executes control programs read from the ROM 13 in order to control the entire PC 10. In such control, the RAM 14 is used as a work area for the CPU 12.

The display 16 is a display device, such as a CRT (cathode-ray tube) display or liquid display, and under control of the CPU 12, displays various pieces of information including, for example, schedule information and application document information.

The operation device 16 is composed of a keyboard or mouse not shown and receives user's operations to provide the CPU 12 with signals indicating the operations through the bus 18.

The hard disk unit 17 is a memory for storing various application programs which will be installed into the PC10. Such applications programs include a registration/reading program 17a and a document approval program 17b, for example.

The document approval program 17b is a program for displaying on the display 15 an application document circulated by the local server 20, receiving an operation of approval/non-approval done by a staff member who referred to the displayed application document, and informing the local server 20 of the operation.

The registration/reading program 17a is a program for producing schedule information and application document information accompanying the schedule information, in response to an operation done by a stuff member, and displaying schedule information and application document information accompanying the schedule information, which are stored in the local server 20. Executing the registration/reading program 17a enables the display of a later-described GUI (Graphical User Interface) on the display 15. On the GUI, schedule information is displayed and information on application documents accompanying such information is expressed by icons and color tones of its screen.

### (3) Configuration of local server 20

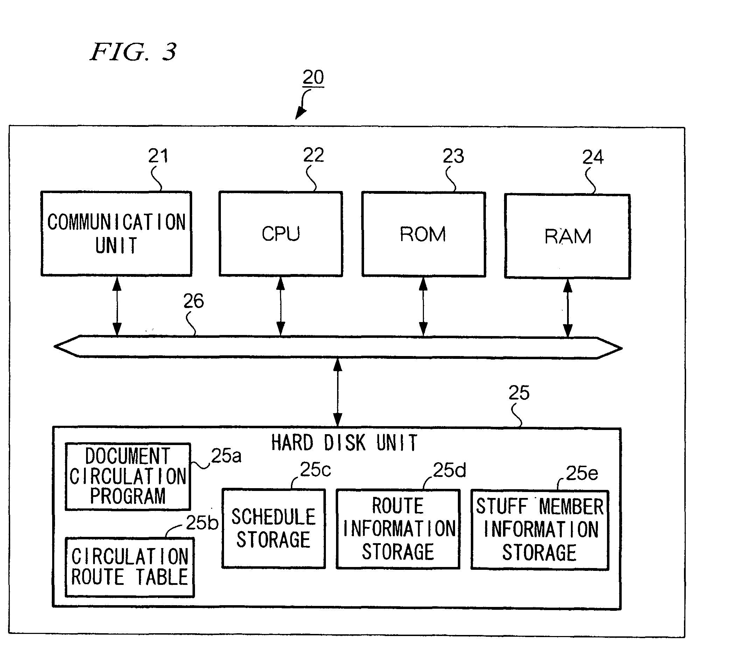

Referring to the block diagram shown in Fig.3, the configuration of the local server 20 will be described. As shown therein, the local server 20 is provided with a communication unit 21, CPU 22, ROM 23, RAM 24, hard disk unit 25, and bus 26 which connects those constituents with each other.

The communication unit 21 comprises a connection interface to the communication line 30 and communication control circuit, and enables data communication with the PCs 10 through the communication line 30.

The ROM 23 is a read-only program memory. The CPU 22 executes control programs read from the ROM 23 in order to control the entire local server 20. In such control, the RAM 24 is used as a work area for the CPU 22.

The hard disk unit 25 stores a document circulation program 25a and a circulation route table 25b. The hard disk unit 25 has a storage area for storing the program and table, and three storage areas consisting of a schedule storage 25c, route information storage 25d and stuff member information storage 25e.

The schedule storage 25c stores schedule information produced by the PCs 10.

The document circulation program 25a is a program for determining a circulation route of application document information produced by one of the PCs 10 and circulating the application document information to each PC 10 through the determined circulation route. Information necessary for determining such circulation route is stored in both of the route information storage 25d and the stuff member information storage 25e.

A determined circulation route is written into the circulation route table 25b by the CPU 22. The hard disk unit 25 has an address table (not shown) having a plurality of data units, each of which shows correspondence between the stuff member code of each stuff member and the address of the stuff member's PC 10. Using as keys stuff member codes obtained by referring to the above circulation route, the CPU 22 retrieves addresses of PCs 10 of the members in the addresses table, and circulates an application document information based on the resultant addresses. Information indicating whether or not each stuff member on the circulation route approve the application is also written in the circulation route table 25b.

### (4) Configuration of schedule storage 25c

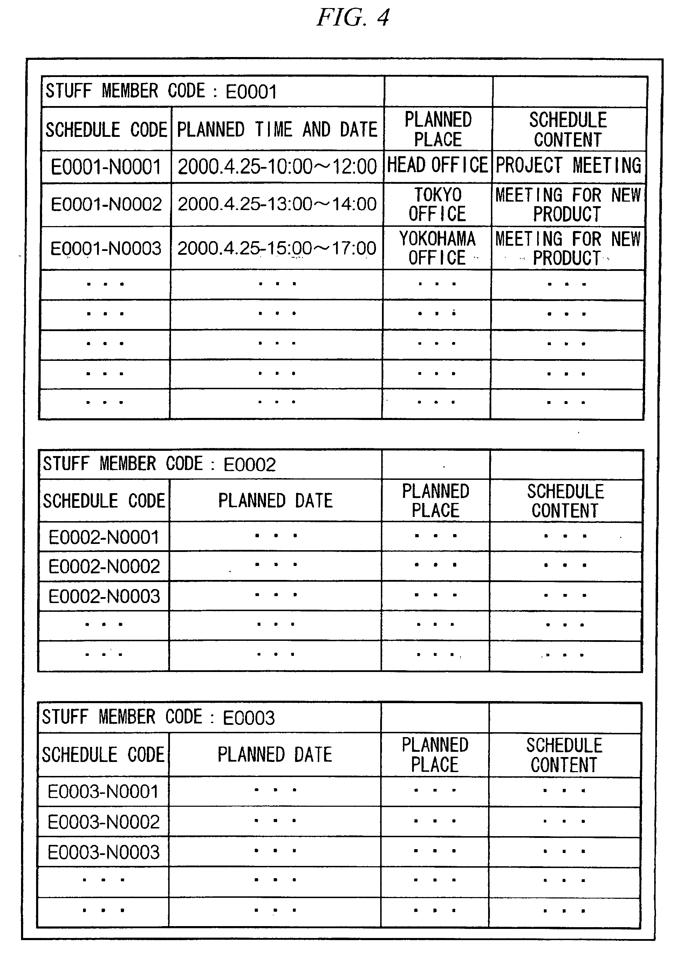

Fig.4 shows an example of format of data stored in the schedule storage 25c. As shown therein, each "stuff member code" and schedule information about a stuff member indicated by the stuff member code are stored being correlated with each other. Each schedule information is composed of a "schedule code," "planned time and date," "planned place," and "schedule content."

The "schedule code" is information identifying each schedule. Each schedule code is unique and specifies only one schedule. The schedule code is assigned in common to each schedule and each application document information accompanying the schedule. This makes it possible to manage the schedule information and the application document information being correlated each other.

In the example shown in Fig.4, a stuff member indicated by the stuff member code "E0001" has a plan to attend a "project meeting" at the "head office" from " 10:00 to 12:00 on April 25, 2000." In this example, a schedule code of "E0001-N0001" is assigned to this schedule information.

Of this schedule code "E0001-N0001," the part "E0001" shows code information which is common to the stuff member code inherent to each stuff member, while the part "N0001" shows code information fixed to each schedule of the stuff member.

### (5) Configuration of route information storage 25d

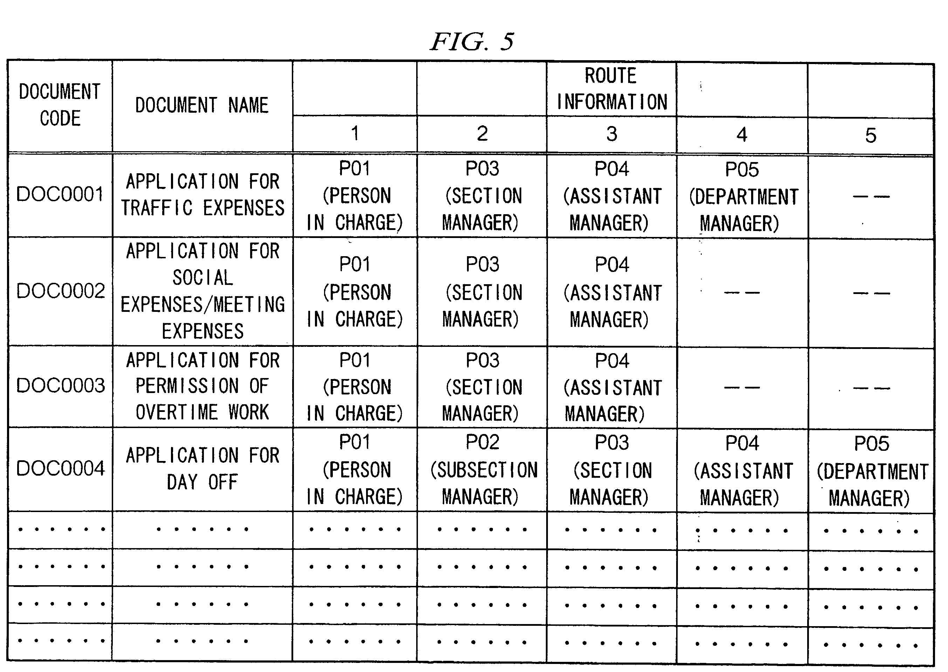

Fig.5 shows an example of format of data in the route information storage 25d. A "document code" shown therein is identification of each application document information, and "route information" is information indicating destinations on the circulation route of the application document information and the order in which the application document information is transferred which are predetermined based on house instructions. The destinations on circulation route are expressed by "managerial post codes" to specify desired managerial posts. For example, an "application of traffic expenses" indicated by the document code "DOC0001" is to be circulated in the order of the managerial posts "P01," "P03," "P04," to "P05," that is, person in charge, section chief, assistant mange of department, to department manager.

In addition, the figures of each managerial post, which follow "P," means the rank level of each managerial post, in which the rank level becomes lower as the figures becomes smaller. For instance, "P01" is a managerial post of which rank level is the lowest.

The CPU 22 of the local server 20 uses as a key the document code of application document information made by each PC 10 in order to retrieve information in the route information storage 25c, thereby extracting necessary route information based on a managerial post name.

### (6) configuration of stuff member information storage 25e

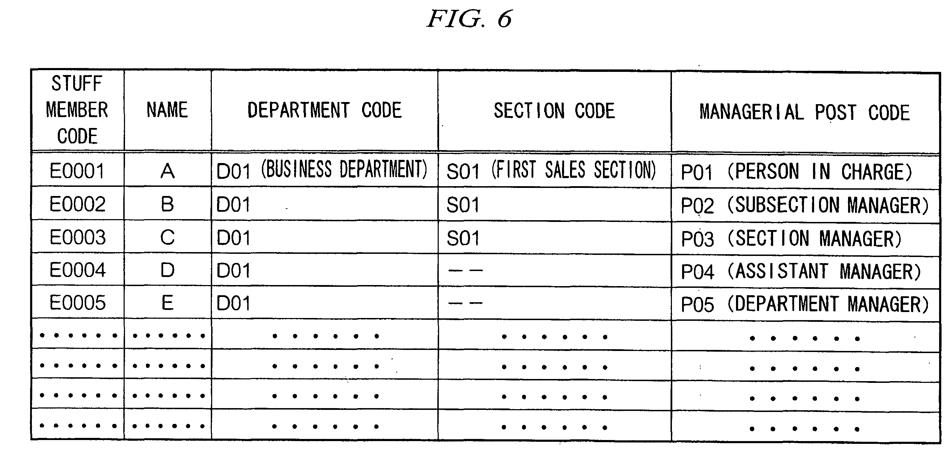

Fig.6 shows a format of data in the stuff member information storage 25e. In this figure, a "stuff member code" is an identification code of each stuff member, "department code" is an identification code of each department, and "section code" is an identification code of each of the sections composing a certain department. For example, it is meant that a stuff member "B" indicated by the stuff member code "E0002" belongs to the first sales section indicated by the section code "S01" in a business department indicated by the department code "D01," and the stuff member is a chief clerk.

As described above, the CPU 22 of the local server 20 uses the route information storage 25d to extract route information based the managerial post name. Furthermore, the CPU 22 replaces a managerial post code included in the route information with a stuff member code stored in the stuff member information storage 25e. This yields a circulation route whose destinations are expressed by the stuff member codes.

### (7) Configuration of circulation route table 25b

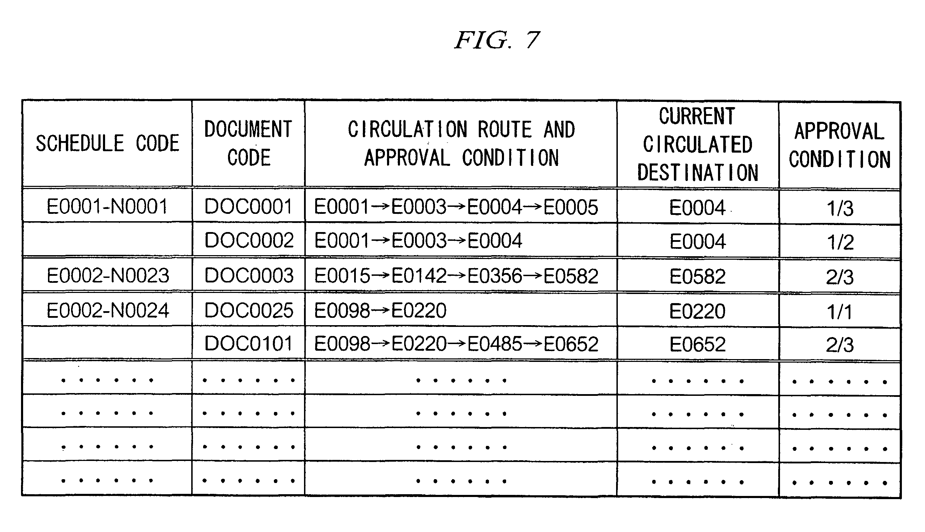

Fig.7 is a format that exemplifies the circulation route table 25b. In the circulation route table 25b, stored are a "schedule code," "document code" of the application document information accompanying the schedule indicated by the schedule code, "circulation route and approval condition" of the application document, "current circulated destination," and "approval condition," all of which are correlated each other.

For example, in this figure, as the application document information accompanying the schedule of a schedule code "E0001-N0001," there are types of documents indicated by the document codes "DOC0001" and "DOC0002." And the example shows that the application document indicated by the document code "DOC0001" will be circulated along a circulation route of "E0001, E0003, E0004, to E0005," while the application document indicated by the document code "DOC0002" will be circulated along a circulation route of "E0001, E0003, to E0004."

The "current circulated destination" is information that shows which destination in the circulated route is now under reading. The example shows that application documents indicated by the document codes "DOC0001" and "DOC0002" are currently circuited to the "E0004" for reading.

Further, the "approval condition" is information showing that the approval for each application document has progressed to which stage. To be specific, this information is a fraction which has as a denominator, the number of circulated destinations other than a stuff member who made an application document and, as a numerator, the number of circulated destinations who have already approved the application document. The example shown means that an application document indicated by the document code "DOC0001" has an approval condition of 1/3, because one circulated destination "E0003" of all the three circulated destinations "E0003, E0004 and E0005" has already approved it. Further, an application document indicated by the document code "DOC0002" has an approval condition of 1/2, because one circulated destination "E0003" of all the two circulated destinations "E0003 and E0004" has already approved it.

Accordingly, when the last circulated destination located at the last of a certain circulation route approved a document, the numerical value showing the approval condition is "1," because both denominator and numerator for the approval condition equal to each other. Namely, the nearer the numeral value for the "approval condition" to "1," the more the approval advances.

The foregoing "current circulated destination" does not always agree with a circulated destination that completed the approval. For example, a schedule indicated by the schedule code "E0002-N0024" accompanies two application documents indicated by the document codes "DOC0025" and "DOC0101." It is meant that, of these documents, one application document shown by the document code "DOC0025" has already been circulated to a destination shown by the code "E0220," and approved by the destination, because its approval condition is "1/1." On the other hand, an application document expressed by the document code "DOC0101" has already been circulated to the last destination shown by the code "E0652," but has not been approved yet by a circulated destination shown by the code "E0652," because its approval condition is "2/3." The condition is that only a circulated destination indicated by the code "E0485" approved it.

### (8) Configuration of GUI

The configuration of the GUI displayed on the display 15 of each of the foregoing PCs10 will be described.

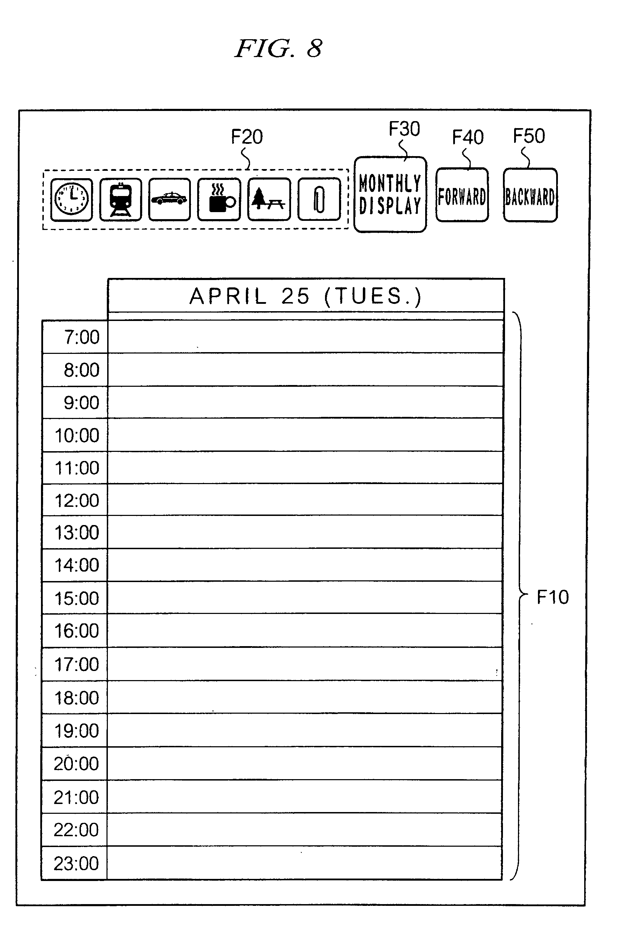

The CPU 12 of each PC 10 executes the registration/reading program stored in the hard disk unit 17 to display a GUI shown in Fig.8 on the display 15.

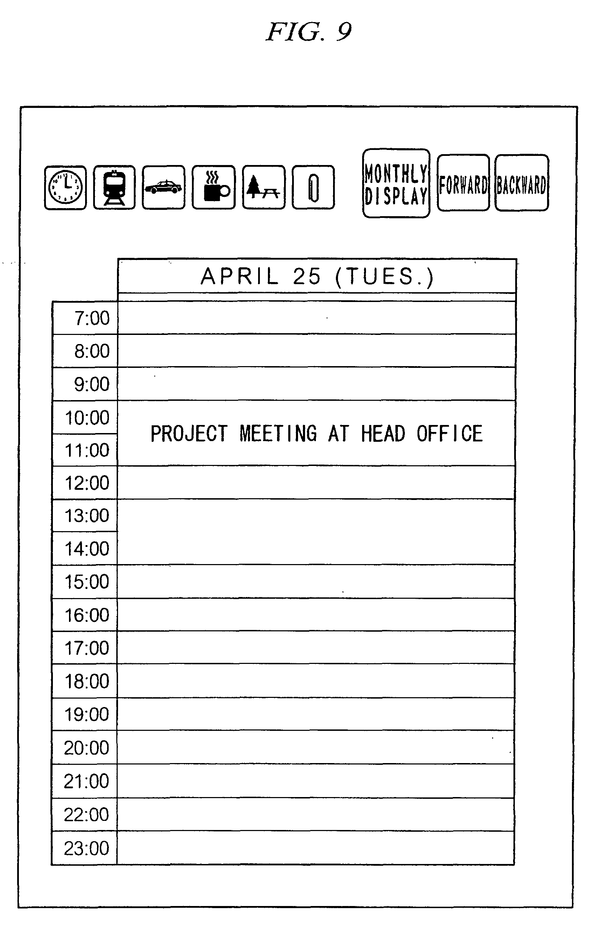

In the figure, a reference F10 designates a group of schedule columns corresponding to different time bands. A stuff member can operate a mouse to point a desired one of the columns F10 to select a desired time band and writes into the selected time band of the schedule column F10 a place and/or content of a schedule with a keyboard or mouse. Fig.9 pictorially exemplifies the GUI in which a schedule for attending a "project meeting" to be held at the "head office" from "10:00 to 12:00 on April 25."

In Fig.8, a reference F20 designates icons showing types of various applications that accompany schedules.

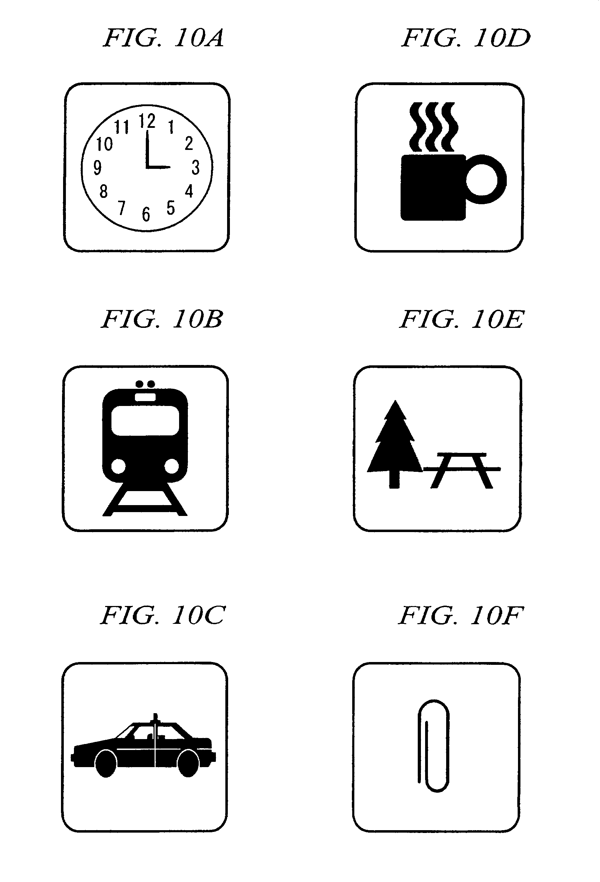

These icons will be described with reference to Figs.10A to 10F. Fig.10A shows an icon indicating application of overtime work, Fig.10B shows an icon indicating application of traffic expenses, Fig.10C shows an icon indicating application of approval to take a taxi, Fig.10D shows an icon indicating application of payment of social expenses/meeting expenses, and Fig.10E shows an icon indicating application of day off. Further, Fig. 10F shows an icon indicating, not an application, but attached information correlated with a desired schedule to some extent. For instance, in the case that the schedule is meeting, the attached information includes information about materials and others for use in the meeting.

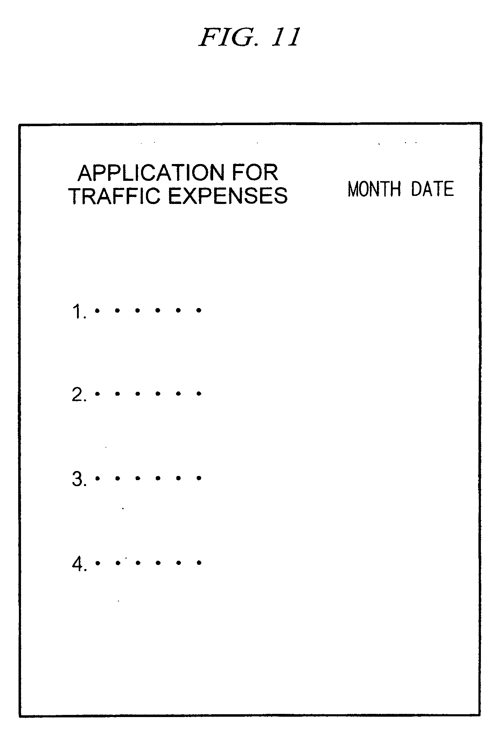

After inputting a desired schedule, the stuff member points any of the icons F20 with the mouse, the format of an application document necessary for an application shown by the pointed icon will then displayed on the display 15. Fig.11 illustrates a format for the application of traffic expenses, which is displayed on the display 15, in cases the icon showing the application of traffic expenses was pointed. Accordingly, the stuff member may make the application document according to the displayed format.

When the stuff member has made the application document, the icon showing the type of the application document is displayed in the schedule column F10. Fig.12 illustrates example of the GUI obtained when the applications for traffic expenses and social expenses/meeting expenses have been made accompanying with scheduling "project meeting at head office" from "10:00 to 12:00 on April 25." The stuff member can easily understand which application has already been made in relation to which schedule with reference to the GUI.

The application document thus made is approved in turn by each circulated destination, and the approval condition about the application is held in the circulation route table 25c. This approval condition is represented by the background color of the schedule column F10 of the GUI. For example, Fig.13 pictorially shows the GUI that represents an approved condition for the application with regard to "10:00 to 12:00 on April 25." In this figure, the background color of the schedule column F10, which corresponds to "10:00 to 12:00 on April 25," is set into a color tone that corresponds to the approved condition of the application shown by the icon within the schedule column F10. In the hard disk unit 17 of each PC 10, a color tune table shown in Fig.14 is stored. The CPU 12 makes reference to the color tone table to determine a background color corresponding to individual approved condition, and paints one or more necessary time band in the determined color. In the color tone table, there are a series of background colors whose color tone becomes deeper as the numerical value of the approval condition comes closer to "1." Thus the more the approval condition advances, the deeper in the color tone or the background. However, in cases where a plurality of icons exist in one section of the schedule column F10, an approval condition which has the highest priority is selected and the background color corresponding to the selected approval condition is determined. There are some methods for determining priority. In an example of the method, an approval condition of application having the highest progressive level is determined to have the highest priority among the applications indicated by the icons. In another example, rejection is regarded as more important than approval. That is, when one of the applications corresponding to the icons is rejected, the background is displayed in the color corresponding to the rejection.

The stuff member can visually understand how the circulation of an application document advances with reference to such background color of the schedule column F10.

In the case that an application is finally approved, that is, the numerical value for the approval condition in the circulation route table 25c becomes "1," the icon corresponding to that application is circled as shown in Fig.15. The background of an objective section of the schedule column is painted in a color tone corresponding to an application shown by an icon that has not been circled yet.

Referring to which icon is circled allows the stuff member to visually comprehend whether an applied document is finally approved or not.

Referring to Fig.8 again, a reference F30 shows an icon for displaying schedules month by month. Clicking this icon cause the display screen to move to that for monthly schedules, as shown in Fig.16. When an icon F31 shown in Fig.16 is clicked, the monthly display screen shown in Fig.16 is allowed to transfer to the daily display screen shown in Fig.8.

Furthermore, references F40 and F50 shown in Fig.8 are icons to move to a display screen for the last day's schedule or the next day's schedule. In other words, in the condition shown in Fig.8, when a stuff member clicks the icon F40, the display screen transfers to that for schedules on April 24. If the icon F50 is clicked, the display screen is made to transfer to that for scheduled on April 26.

As stated above, the GUI is able to display on the same screen schedules and information in relation to applications accompanying to the schedule under the condition that both of the schedules and the information are correlated each other.

### B: Operation

An operation of the embodiment configured above will now be described.

Hereafter, the description will be given to each of the operations divided into three parts of (1) making schedule information and a application document, (2) circulating the application document, and (3) displaying the schedule information and an approval condition.

Hereafter, it is supposed that a stuff member whose stuff member code is "E0001" inputs a schedule of that he or she attends to a "project meeting" to be held at the "head office" from "10:00 to 12:00 on April 25, 2000 A.D." and performs an application of traffic expenses and social expenses/meeting expenses.

### (1) Making schedule information and application document

First, with reference to a flowchart shown in Fig.17, an operation for causing the CPU 12 of each PC 10 to make both of schedule information and an application document will be described.

A stuff member operates the operation device 16 to input an instruction making a certain PC 10 start to execute registration/reading program 17a. In response to the instruction, the CPU 12 reads out the program 17a from the hard disk unit 17 to load it into the RAM 14, and start to execute a main routine shown in Fig.17.

First, at step Sa1, the CPU 12 displays on the display 15 a screen that urges the stuff member to input his or her stuff member code, and waits for an input operation done by the stuff member. The stuff member then inputs his or her stuff member code "E0001."

Then, at step Sa2, the CPU 12 accesses the local server 20 via the communication line 30 by controlling the communication unit 11.

Then, at step Sa3, the CPU 12 uses, as a key, the stuff member code "E0001" input at step Sa1, reads out the schedule information having the key from the schedule information storage 25c, then uses, as another key, a schedule code included in the read schedule information, and reads out an approval condition having the key on the circulation route table 25b.

The CPU 12 then displays the read information on the GUI described before. In this case, it is assumed that there is no registration about schedules to be done on April 25 in the schedule information storage 25c. Accordingly, the screen at this time is displayed as shown in Fig.8.

Then, at step Sa4, the CPU 12 scans the operation device 16 to determine if there has been a stuff member's input operation or not. If there has not been such input operation, the determination result is "NO," the CPU 12 will repeats the step Sa4.

When a stuff member performs input operation, the processing is made to go to step Sa5, where the CPU 12 determines whether the input operation is the input of characters or not. If the determination is "YES," the processing is made to go to step Sa6 in order to display the characters.

In the case that the stuff member inputs a schedule that he or she attends to a "project meeting" at the "head office" from "10:00 to 12:00 on April 25, 2000 A.D.," the corresponding characters to this input are displayed. When the stuff member finished to input the schedule, the characters of "head office, project meeting" are displayed at the time bands of "April 25, 10:00 to 12:00," as shown in Fig.9, before the processing is made to return to step Sa4.

When the schedule has been inputted, the CPU 12 adds a schedule code of "E0001-N0001" to this schedule, then stores this in the RAM 14 with the schedule information.

Then, to apply applications accompanying this schedule, the stuff member first points with a mouse an icon showing an application for traffic expenses. As a result, the determination at step Sa4 becomes "YES," then that at step Sa5 becomes "NO," thereby the processing being made to go to step Sa7.

At step Aa7, the CPU 12 determines if the input operation shows an application or not. In this case, the determination is "YES," so the processing goes to step Sa8, where the CPU 12 executes processing to make an application document, which will be described later.

In this processing to make application documents, an application document for traffic expenses and an application document for social expenses/meeting expenses are made in response to the stuff member's operations. Every time when each of these application documents is made, an icon for showing the application is displayed on the schedule column. Hence, when the processing to make the application documents is finished, the icons showing the application for traffic expenses and for social expenses/meeting expenses are displayed in the time bands of "10:00 to 12:00 on April 25" in the schedule column, where "head office, project meeting" is shown, as shown in Fig.13.

When the schedule input and the processing to make the application documents accompanying thereof are completed, the stuff member performs operations to establish the contents of the schedule and the applications. In response to the operations, the CPU 12 determines "YES" at step Sa4 in Fig.17, "NO" at step Sa5, and "NO" at step Sa7, before proceeding to step Sa9. At step Sa9, the CPU 12 determines whether or not the input operations show the establishment of the contents. In this case, since the determination becomes "YES," the processing proceeds to step Sa10.

At step Sa10, the CPU 12 sends to the local server 20 data representing the schedule information and data showing the application documents accompanying the schedule information, which have been input by the stuff member, together with the stuff member code, schedule code, and document code of the application documents.

In this case, sent to the local server 20 are the schedule information of "head office, project meeting" assigned to "April 25, 10:00 to 12:00," data showing the applications for traffic expenses and social expenses/meeting expenses, stuff member code "E0001," schedule code "E0001-N0001," and document codes "DOC0001" and "DOC0002."

When the stuff member performs an operation to terminate the registration/reading program, the determination at step Sa11 becomes "YES," thus the processing being ended.

If the operation is made for objects other than the character input, application, establishment, and termination, the determination at step Sa11 is "NO," so other processing corresponding to the operation actually done will be executed. For example, such operations include operations for switching the display from the day display to the month display and from the last day's schedule to the next day's schedule.

The foregoing processing to make the application documents will now be detailed.

Fig.18 shows a flowchart showing such processing to make the application documents.

First, at step Sb1, the CPU12 reads format data of an application document indicated by an icon selected by the stuff member, from the hard disk unit 25 of the local server 20. The read format data are displayed on the display 15.

When the stuff member operates the operation device 16 to performs input operations referring the displayed format, the CPU 12 receives the command at step Sb2.

Then, at step Sb3, it is determined if or not the received operations show a command for ending the making of the document. If the received operations are operations other than the command of making the document, such as inputs of characters or symbols, the determination becomes "NO," then going to step Sb4.

At step Sb4, the CPU 12 executes processing corresponding to the input operation. For example, in this processing, input characters or symbols are displayed on the display 15. The processing is again returned to step Sb2. In this way, the CPU 12 repeatedly receives user's input operations of characters to display those characters.

When the stuff member finishes the making of the application document, he or she will make operations showing it. This causes the determination at step Sb3 to be "YES," then the processing proceeds to step Sb5.

At step Sb5, the CPU 12 displays on the schedule column an icon corresponding to the made application document, before returning to step Sa4 of the main routine shown in Fig.17.

### (2) Circulation of application document

The circulation of an application document will now be described.

First, referring to a flowchart shown in Fig.19, an operation to enables the CPU 22 of the local server 20 to specify a circulation route will be now detailed.

As stated in the above item (1), responsively to data transmission of the application document from the PC 10 to the local server 20, the CPU 22 of the local server 20 reads the document circulation program 25a from the hard disk unit 25 and loads it into the RAM 24. This starts the execution of procedure of flowchart shown in Fig.19.

First of all, at step Sc1, the CPU 22 extracts from the received data the stuff member code, schedule code and document codes, stores the schedule information into the schedule information storage 25c, and stores data showing the application document into a given memory area of the hard disk unit 25.

In this case, in addition to extraction of the stuff member code "E0001," schedule code "E0001-N0001," and document codes "DOC0001" and "DOC0002," the schedule information of "head office, project meeting" corresponding to "10:00 to 12:00 on April 25" is stored into the schedule information storage 25c and data of the applications for traffic expenses and social expenses/meeting expenses are stored into the hard disk unit 25.

Then, at step Sc2, the CPU 22 uses the extracted document codes "DOC0001" and "DOC0002" as keys to retrieves information in the route information storage 25d shown in Fig.4, so that route information corresponding to each document code is obtained. In this embodiment, for the document code "DOC0001," information about a route of "P01 (person in chief), P03 (section chief), P04 (assistant manager of department), and to P05 (department manager)" is obtained. On the other hand, for the document code "DOC0002," information about a route of "P01 (person in chief), P03 (section chief), and to P04 (assistant manager of department)" is obtained.

Then, at step Sc3, the CPU 22 makes reference to the route information based on the position titles and information on the stuff members stored in the stuff member information storage 25d, thus expressing circulation routes using stuff member codes.

Specifically, retrieving using as a key the stuff member code of a stuff member who made the document is carried out on data in the stuff member information storage 25e so that both department and section codes of an organization to which the stuff member belongs are extracted. Since the stuff member code has been provided from the PC 10 together with the application document data, as described before, this code is used as well.

Then, from data which correspond to the organization shown by the department and section codes and stored in the stuff member storage 25e, stuff member codes corresponding to the position title codes contained in the route information are extracted.

The position title codes contained in the route information are then replaced by the extracted stuff member codes, and a circulation route in which the stuff members who are destinations are defined by their stuff member codes is finally obtained. The circulation route thus obtained is written into the circulation route table 25b being correlated with the schedule code "E0001-N0001," before the processing is terminated.

With reference to a sequence shown in Fig.20, an operation of circulation of the application document will now be described.

When the determination of the circulation route has finished, the process of the CPU 22 of the local server 20 proceeds to step Sd1 shown in Fig.20. At step Sd1, the CPU 22 refers to the circulation route table 25b shown in Fig.7 to specify a destination to which the application document indicated by the document code "DOC0001" should be circulated next. In this embodiment, the circulated destination next located to the person who wrote the document and is indicated by the stuff member code "E0001," is a stuff member whose code is "E0003."

Then, at step Sd2, the CPU 22 refers to a not-shown address table and thereby obtain an address on the network of the PC 10 used by the stuff member to which the application document will next be circulated. Using this address, the CPU 22 sends the application document indicated by the document code "DOC0001" In this case, the CPU 22 writes "E0003" into a positron of "current circulated destination" that corresponds to the document code "DOC0001" on the circulation route table 25b.

When the PC 10 receives the application document, the processing proceeds to step Sd3. At this step Sd3, the CPU 12 of the PC10 stored temporarily the received data into the hard disk unit 17 and displays on the display 15 a notification informing that the application document has been received.

When the stuff member, who saw the notification, performs an operation showing approval processing through the operation device 16, the processing proceeds to step Sd4, where the CPU 12 operates so as to display on the display 15 an approval screen shown in Fig.21.

As shown in Fig.21, information about applications which should be approved or non-approved, or, which have already been approved is displayed on the display 15. For example, this display shows that an application for a day off on April 26 submitted by an applicant B has already been approved by the stuff members who are in charge of approval.

The stuff members who are in charge of approval are able to perform an operation of approval/non-approval by pointing an approval button B1 or non-approval button B2 with a mouse.

When a stuff member wants know details of an application, he or she points a detail button B3. The CPU 12 responds to this pointing such that it reads out data of the desired application document form the hard disk unit 17, then displays the data on the display 15. The stuff members can refer to a displayed application document to determine whether or not the application should be approved, and operates a predetermined operation.

In response to a stuff member's operation showing the approval or non-approval for the application document, the processing is made to go to step Sd5, where the CPU 12 accepts this operation.

Then; at step Sd6, the CPU 12 sends to the local server 20 a notification showing the approval or non-approval together with the document code of the approved application document.

When the local server 20 receives the data that have been sent from the PC 10, the processing proceeds to step Sd7. At step Sd7, the CPU 22 of the local server 20 updates the circulation route table 25b according to the received data.

In this case, if approved, the CPU 22 rewrites a value of the approval condition into "1/3" on the circulation route table 25b. Then, the processing by the CPU 22 is returned to step Sd1, so the foregoing circulation processing of the application document will be executed for the next stuff member indicated by the "E0004."

The processing described above will be performed in turn for all the destinations to be circulated on the circulation route written in the circulation route table 25b. When the last destination to be circulated on the circulation route approves the application, the value showing the approval condition becomes "1."

### (3) Display of schedule information and approval condition

Referring to the flowchart shown in Fig.17, the display of schedule information and an approval condition will now be described.

At step Sa3 shown therein, the CPU 12 of each PC10 reads out schedule information from the schedule information storage 25e of the local server 20. Using a schedule code contained in the read schedule information, as a key, the CPU 12 further reads out a document code and an approval condition corresponding to the key and stored in the circulation route table 25b. In the case of the circulation route table 25b shown in Fig.6, the approval condition for a document code "DOC0001" is "1/3," while that for a document code "DOC0002" is "1/2."

The CPU 12 then displays pieces of the read information on the GUI, as shown in Fig.13. That is, of the read data of the approval conditions, color tone data that correspond to the numerical value (in this embodiment, "1/2") which is the closest to "1" are read out form the foregoing color tone table. The read color tone is then used in displaying the background color of the schedule column P10.

Moreover, if the approval condition for the document code "DOC0001" has increased up to "1," an icon showing the application of traffic expenses, which corresponds to the document code "DOC0001," is circled as shown in Fig.15.

According to the present embodiment, both of schedule information on stuff members and type of applications and approval conditions that accompany the schedule information are displayed on the same screen in the mutually correspondence fashion. This enables a stuff member to easily mange both of his or her schedules and applications by only making reference to this screen.

### C: Modifications

As stated before, the present invention is not limited to the foregoing embodiments, but various modifications are available as bellow.

### (1) Embodiment of PCs 10

In the above embodiment, the PCs 10 connected to the communication line 30 are used. Instead of the PCs, PDAs (Personal Digital Assistants) in which a wireless communication system such as a PHS (Personal Handyphone System) is incorporated may be used. In this situation, the local server 20 is configured to be connected to a PHS network including the PHSs and data are mutually communicated to and from the PDAs via the PHS network.

### (2) Function of local server 20

Although the foregoing embodiment employs the local server 20 that comprises the storing function of schedules and the reading function of application documents, these functions may be assigned to different nodes coupled with the communication line 30. Alternatively, the storing function of schedules may be given to the PCs 10.

### (3) Configuration of GUI

The layouts of the GUI shown in Figs.8, 9, 10A, 10B, 10C, 10D, 10E, 10F, 11 to 13, 15, 16 and 21 just show one example. Other various types of layouts of the GUI can be devised with consideration of maneuverability and a visual performance.

Instead of displaying the approval condition in different background color tones, the approval condition may be expressed in its numerical value itself as it is. Alternatively, according to various approval conditions, icons showing those approval conditions may be changed in their shapes and color tones.

Further, instead of circling an icon corresponding to a finally approved application, various modifications may be provided. Those include changing of display colors of icons, additional display of a massage representing the final approval, and removal of the finally approved icon from the screen.

Further, a modification may be made such that when an application is rejected, the icon corresponding to the application flashes on and off.

### (4) Display mode

Though, in the foregoing embodiment, the schedule and the information accompanying the schedule are displayed on the same screen, but the present invention is not always limited to such a display manner.

For example, a default screen may be configured to display schedules alone, in which when a stuff member selects a desired schedule from the displayed schedules, the display screen is transferred to one that displays information accompanying the selected schedule. That is, any display manner is possible as long as the schedule and applications accompanying the schedule are linked to each other.

### (5) Embodiment of circulation processing

In the foregoing embodiment, an application document undergoes the circulation processing on the assumption that each stuff member and each PC 10 are related one by one. Specifically, the local server 20 has the address table showing the correspondence relationship between the stuff member codes and the addresses of the PCs 10. And the application decumbent has been circulated on the address of a PC10 selected by retrieving information of the address table.

However, the present invention is not limited to this processing technique and the following modification may be utilized.

The local server 20 once preserves application documents for each stuff member who is in charge of approval, instead of transmitting them to each PC 10 handled by each of such stuff members. If a stuff member who is in charge of approval operates a certain PC 10 (it is not always that the stuff member owns this PC by himself or herself) to log in the system through inputs of an user ID and authentication of a password, the local server 20 sends to the PC 10 the application documents which have been preserved being correlated with the stuff member. This makes it possible to a stuff member to engage in the circulation and approval operation of application documents through any PC 10, not limited to his or her own PC 10.

## Claims

1. A scheduler comprising:
storage means for storing a business schedule of a business performer and application information indicating a matter requested by the business performer being correlated each other;
extracting means for extracting the business schedule and the application information stored in the storage means; and
display means for displaying the extracted business schedule and application information being correlated each other.

2. The scheduler of claim 1, wherein the application information is information to request an approval about a special matter.

3. The scheduler of claim 2, wherein the special matter includes at least one of doing overtime work and getting a day-off.

4. The scheduler of claim 1, wherein the application information is information to carry out a special job.

5. The scheduler of claim 4, wherein the special job includes at least one of payment of transportation expenses, giving allowance and giving expense account.

6. The scheduler of claim 1, wherein the display means displays both the business schedule and the application information on the same screen.

7. The scheduler of claim 1, wherein the display means capable of selectively switching a first display screen displaying the business schedule and a second display screen displaying the application information corresponding to the business schedule in response to an operation of the business performer.

8. The scheduler of claim 1, wherein the display means displays the type of the requested matter indicated by the application information and progress of approval processing for the business application.

9. The scheduler of claim 8, wherein the display means displays the type of the requested matter and the progress of approval processing by means of an icon.

10. The scheduler of claim 8, wherein the display means expresses the progress of the approval processing for the business application by a background color of a screen to be displayed.

11. The scheduler of claim 1, wherein the display means is provided in a mobile communication terminal that communicates data through a wireless manner.

12. A schedule displaying method comprising the steps of:
extracting a business schedule and application information among business schedules and application information stored in storage means, each business schedule and each application information being correlated each other; and
displaying the extracted business schedule and application information being correlated each other.

13. The schedule displaying method of claim 12, wherein the displaying step is a step for displaying both business schedule and application information on the same screen.

14. The schedule displaying method of claim 12, wherein the displaying step includes the steps of:
displaying the business schedule;
receiving an operation of the business performer to select a desired business schedule from the business schedule displayed; and
displaying the application information stored being correlated with the selected business schedule.

15. A program making a computer execute the steps of:
extracting a business schedule and application information among business schedules and application information stored in storage means, each business schedule and each application information being correlated each other; and
displaying the extracted business schedule and application information being correlated each other.

16. A computer-readable recording medium storing a program making a computer execute the steps of:
extracting a business schedule and application information among business schedules and application information stored in storage means, each business schedule and each application information being correlated each other; and
displaying the extracted business schedule and application information being correlated each other.
